# EUROPEAN PATENT APPLICATION

(11) **EP 2 579 073 A1**
(43) Date of publication of application: **10.04.2013**
(21) Application number: 11191510.4
(22) Date of filing: 01.12.2011
(51) Int. Cl.: G02B 5/20, G02B 27/10, G02B 26/00, H04N 9/31, B82Y 20/00

(54) **Image generating device with improved illumination efficiency**

(30) Priority: 03.10.2011 TW 100135731
(71) Applicant: Acer Incorporated, New Taipei City 221 (TW)
(72) Inventor: Ko, Chueh-Pin, 221 New Taipei City (TW)
(74) Representative: Becker Kurig Straus

(57) **Abstract**

An image generating device (200) includes a light source (210), a light filtering element (220, 220D), a light conversion element (260, 260A, 260B, 260C, 260D), and an image generating element (240) . The light source is for generating visible light. The light filtering element is disposed on a light path of the visible light. The light filtering element includes a plurality of light filtering blocks (222, 224, 226, 222D, 224D, 226D, 228D), and each of the light filtering blocks is for allowing light with wavelengths within a predetermined range to pass through. The light conversion element is disposed on the light path. The light conversion element includes a first quantum dot layer (262A, 262B, 262C, 262D) for converting light with wavelength below a first wavelength to light with the first wavelength. The image generating element is for generating images according to light passed through the light filtering element and the light conversion element.

## Description

### Field of the Invention

The present invention is related to an image generating device utilizing quantum dots for improving illumination efficiency according to the pre-characterizing clause of claim 1.

### Background of the Invention

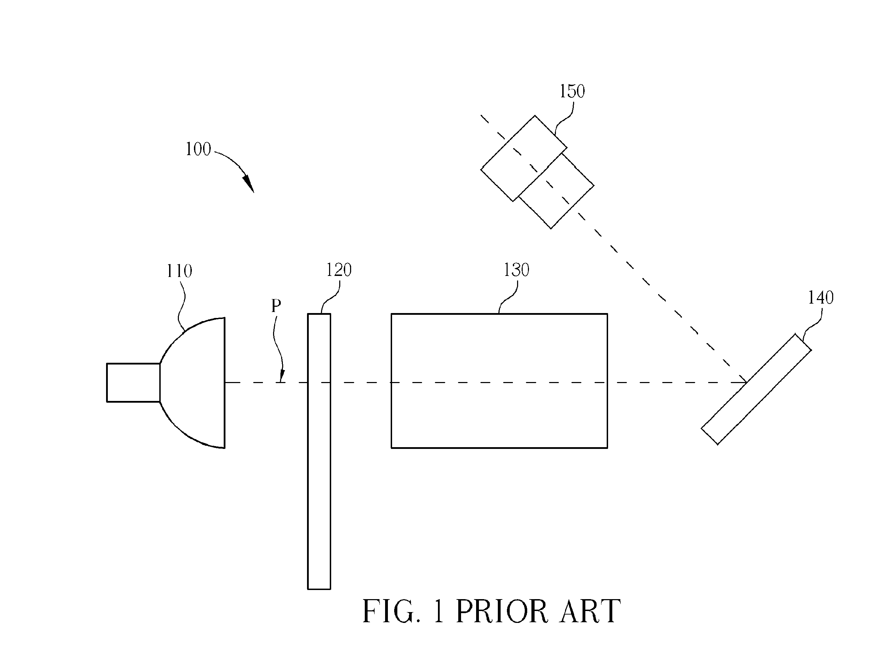

Please refer to FIG. 1. FIG. 1 is a diagram showing a projector 100 of the prior art. As shown in FIG. 1, the projector 100 comprises a light source 110, a color wheel 120, an optical module 130, an image generating element 140, and a projection module 150. The light source 110 is for generating visible light with a continuous spectrum. The color wheel 120 is disposed on a light path P of the visible light. The color wheel 120 comprises a plurality of light filtering blocks, such as a red light filtering block, a green light filtering block, and a blue light filtering block. The red light filtering block is for allowing light with wavelengths of red light (such as 600 nanometers to 700 nanometers) to pass through. The green light filtering block is for allowing light with wavelengths of green light (such as 500 nanometers to 600 nanometers) to pass through. The blue light filtering block is for allowing light with wavelengths of blue light (such as 400 nanometers to 500 nanometers) to pass through. The color wheel 120 rotates at a predetermined speed for allowing the red light, the green light, and the blue light to pass through respectively according to a predetermined time sequence. The optical module 130 is for guiding light transmitted from the color wheel 120 to the image generating element 140. The image generating element 140 then generates red images, green images, and blue images according to the red light, the green light, and the blue light transmitted from the optical module 130 respectively. The projection module 150 projects the red images, the green images and the blue images generated by the image generating element 140 onto a screen for forming complete images. The image generating element 140 is generally a digital micromirror device (DMD). The digital micromirror device comprises an array of micromirrors for reflecting the light to generate images according to image data.

However, according to the above arrangement, when the light filtering block of the color wheel 120 allows light with a wavelength within the predetermined range to pass through, other light with a wavelength outside the predetermined range of the light filtering block is filtered out, such that the light with a wavelength outside the predetermined range of the light filtering block cannot be utilized for generating images. Therefore, the visible light generated by the light source of the projector of the prior art is not utilized efficiently.

### Summary of the Invention

This in mind, the present invention aims at providing an image generating device utilizing quantum dots for improving illumination efficiency.

This is achieved by an image generating device according to claim 1. The dependent claims pertain to corresponding further developments and improvements.

As will be seen more clearly from the detailed description following below, the claimed image generating device with improved illumination efficiency includes a light source, a light filtering element, a light conversion element, and an image generating element. The light source is for generating visible light. The light filtering element is disposed on a light path of the visible light. The light filtering element comprises a plurality of light filtering blocks, and each of the light filtering blocks is for allowing light with a wavelength within a predetermined range to pass through. The light conversion element is disposed on the light path. The light conversion element comprises a first quantum dot layer for converting light with a wavelength below a first wavelength to light with the first wavelength. The image generating element is for generating images according to light passed through the light filtering element and the light conversion element.

### Brief Description of the Drawings

In the following, the invention is further illustrated by way of example, taking reference to the accompanying drawings. Thereof
FIG. 1 is a diagram showing a projector of the prior art,
FIG. 2 is a diagram showing a projector of the present invention,
FIG. 3 is a diagram showing a first embodiment of a combination of a color wheel and a light conversion element of FIG. 2,
FIG. 4 is a diagram showing a second embodiment of a combination of the color wheel and the light conversion element of FIG. 2,
FIG. 5 is a diagram showing a third embodiment of a combination of the color wheel and the light conversion element of FIG. 2, and
FIG. 6 is a diagram showing a forth embodiment of a combination of the color wheel and the light conversion element of FIG. 2.

### Detailed Description

The quantum dot is a nanoscale semiconductor material, which can be an element of semiconductor material (such as Si, Ge), or a compound of semiconductor material (such as CdSe or CdS). A particle diameter of the quantum dot is less than 100 nanometers. The quantum dot can absorb light with wavelengths below a predetermined wavelength according to the particle size, and convert the light with wavelengths below the predetermined wavelength to light with the predetermined wavelength. For example, when the particle diameter of a CdSe quantum dot is 2.1 nanometers, the CdSe quantum dot absorbs light with wavelengths below a blue light wavelength, and converts the light with wavelengths below the blue light wavelength to the blue light. When the particle diameter of the CdSe quantum dot is 5 nanometers, the CdSe quantum dot absorbs light with wavelengths below a green light wavelength, and converts the light with wavelengths below the green light wavelength to the green light. When the particle diameter of the CdSe quantum dot is close to 10 nanometers, the CdSe quantum dot absorbs light with wavelengths below a red light wavelength, and converts the light with wavelengths below the red light wavelength to the red light. In addition, a structure of the quantum dot can be composed of more than one semiconductor material. A shell of the quantum dot and a core of the quantum dot can be made of different materials respectively. The present invention utilizes quantum dots with different particle sizes to generate light with different colors for improving illumination efficiency of a projector.

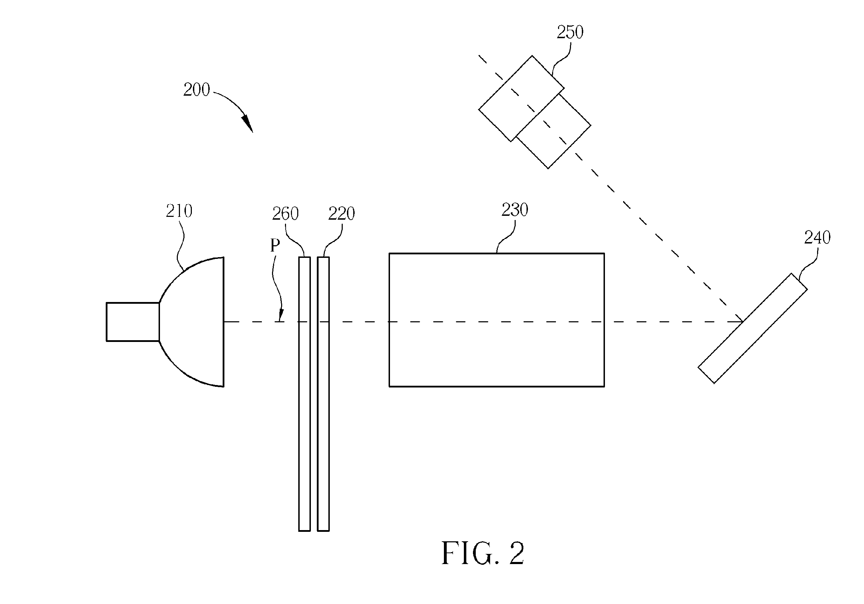

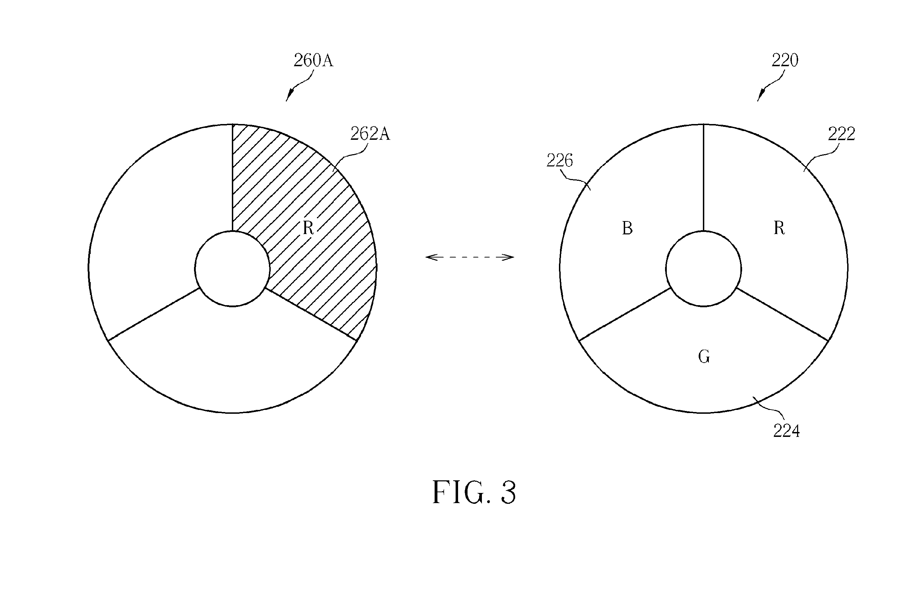

Please refer to FIG. 2 and FIG. 3. FIG. 2 is a diagram showing a projector 200 of the present invention. FIG. 3 is a diagram showing a first embodiment of a combination of a color wheel and a light conversion element of FIG. 2. The projector 200 of present invention comprises a light source 210, a color wheel 220, a light conversion element 260, an optical module 230, an image generating element 240, and a projection module 250. The light source 210 is for generating visible light with a continuous spectrum (the light source 210 may also generate non-visible light, such as UV light). The color wheel 220 is disposed on a light path P of the visible light. The color wheel 220 comprises a first light filtering block 222, a second light filtering block 224, and a third light filtering block 226. The first light filtering block 222 is for allowing light with wavelengths of red light (such as 600 nanometers to 700 nanometers) to pass through. The second light filtering block 224 is for allowing light with wavelengths of green light (such as 500 nanometers to 600 nanometers) to pass through. The third light filtering block 226 is for allowing light with wavelengths of blue light (such as 400 nanometers to 500 nanometers) to pass through. In the above embodiment of the projector of the present invention, the color wheel 220 works as a light filtering element for filtering light. In other embodiments of image generating devices of the present invention, the light filtering element is not limited to a color wheel. The light conversion element 260 is disposed between the light source 210 and the color wheel 220 along the light path P of the visible light. A light conversion element 260A comprises a quantum dot layer 262A. Quantum dots on the quantum dot layer 262A are for converting light with wavelengths below a wavelength of red light (such as 650 nanometers) to the red light with wavelength of 650 nanometers (or around 650 nanometers) . The quantum dot layer 262A is disposed on a position corresponding to the first light filtering block 222. The light conversion element 260 can be disposed on a surface of the color wheel 220 to rotate with the color wheel 220, or the light conversion element 260 can be an independent element, which is rotated synchronously with the color wheel 220. The color wheel 220 rotates at a predetermined speed for allowing the red (R) light, the green (G) light, and the blue (B) light to pass through respectively according to a predetermined time sequence. The optical module 230 is for guiding light transmitted from the color wheel 220 to the image generating element 240. The image generating element 240 (such as a digital micromirror device) then generates red images, green images, and blue images according to the red light, the green light, and the blue light transmitted from the optical module 230 respectively. The projection module 250 projects the red images, the green images and the blue images generated by the image generating element 240 onto a screen for forming complete images.

According to the above arrangement, when the visible light generated by the light source 210 passes through the quantum dot layer 262A, light with wavelengths below 650 nanometers is converted to the red light with wavelength of 650 nanometers (or around 650 nanometers) and then passes through the first light filtering block 222. That is, energy of the red light passed through the color wheel 220 comprises energy of the original red, green, and blue light, and even comprises energy of other light (such as UV light generated by the light source). Therefore, brightness of the red light passed through the color wheel 220 is increased significantly.

In addition, the first light filtering block 222 can also allow light with wavelengths below 700 nanometers to pass through, or the first light filtering block 222 can be replaced by a light transmission block which allows most of the visible light to pass through. The quantum dot layer 262A of the light conversion element 260A can also be utilized for generating the green light or blue light. When the quantum dot layer 262A is utilized for generating the green light, the quantum dot layer 262A is disposed on a position corresponding to the second light filtering block 224, which allows light with wavelengths below 600 nanometers to pass through. According to such arrangement, energy of the green light passed through the color wheel 220 comprises energy of the original green light and blue light, and even comprises energy of other non-visible light. Therefore, brightness of the green light passed through the color wheel 220 is increased significantly. When the quantum dot layer 262A is utilized for generating the blue light, the quantum dot layer 262A is disposed on a position corresponding to the third light filtering block 226, which allows light with wavelengths below 500 nanometers to pass through. According to such arrangement, energy of the blue light passed through the color wheel 220 comprises energy of the original blue light and other non-visible light. Therefore, brightness of the blue light passed through the color wheel 220 is increased significantly.

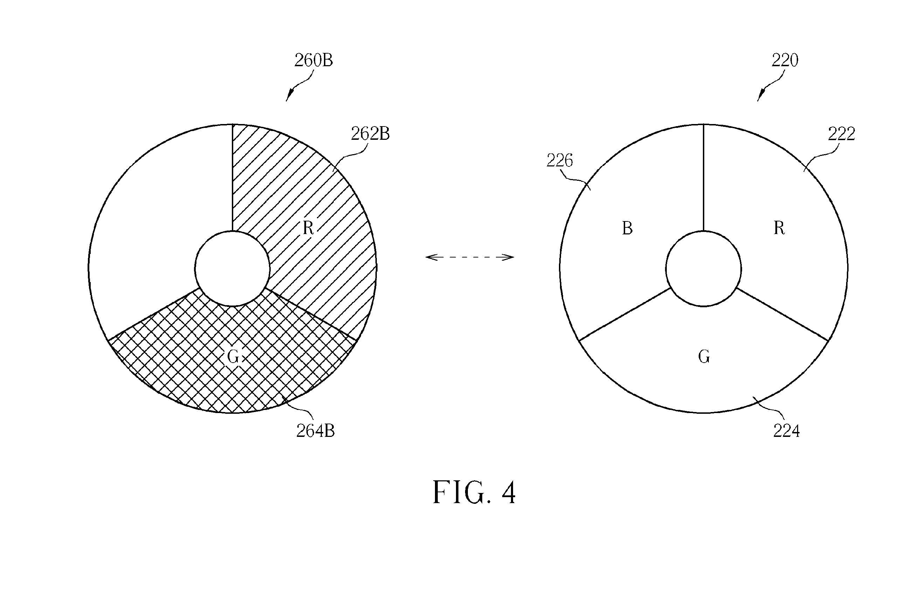

Please refer to FIG. 4, and refer to FIG. 2 as well. FIG. 4 is a diagram showing a second embodiment of a combination of the color wheel and the light conversion element of FIG. 2. As shown in FIG. 4, a light conversion element 260B comprises a first quantum dot layer 262B and a second quantum dot layer 264B. The first quantum dot layer 262B is disposed on a position corresponding to the first light filtering block 222. The first quantum dot layer 262B is for converting the light with wavelengths below a wavelength of red light (such as 650 nanometers) to the red light with wavelength of 650 nanometers (or around 650 nanometers). The second quantum dot layer 264B is disposed on a position corresponding to the second light filtering block 224. The second quantum dot layer 264B is for converting the light with wavelengths below a wavelength of green light (such as 550 nanometers) to the green light with wavelength of 550 nanometers (or around 550 nanometers). The first light filtering block 222 of the color wheel 220 is for allowing the light with the wavelengths of red light (such as 600 nanometers to 700 nanometers) to pass through, or for allowing the light with wavelengths below 700 nanometers to pass through. The second light filtering block 224 of the color wheel 220 is for allowing the light with the wavelengths of green light (such as 500 nanometers to 600 nanometers) to pass through, or for allowing the light with wavelengths below 600 nanometers to pass through. The third light filtering block 226 of the color wheel 220 is for allowing the light with the wavelengths of blue light (such as 400 nanometers to 500 nanometers) to pass through, or for allowing the light with wavelengths below 500 nanometers to pass through.

According to the above arrangement, when the visible light generated by the light source 210 passes through the first quantum dot layer 262B, the light with wavelengths below 650 nanometers is converted to the red light with a wavelength of 650 nanometers (or around 650 nanometers) and then passes through the first light filtering block 222. That is, energy of the red light passed through the color wheel 220 comprises energy of the original red, green, and blue light, and even comprises energy of other light. Therefore, the brightness of the red light passed through the color wheel 220 is increased significantly. When the visible light generated by the light source 210 passes through the second quantum dot layer 264B, the light with wavelengths below 550 nanometers is converted to green light with a wavelength of 550 nanometers (or around 550 nanometers) and then passes through the second light filtering block 224. That is, energy of the green light passed through the color wheel 220 comprises energy of the original green and blue light, and even comprises energy of other light. Therefore, the brightness of the green light passed through the color wheel 220 is increased significantly.

Similarly, the first quantum dot layer 262B and the second quantum dot layer 264B of FIG. 4 can be a combination to generate the red light and the blue light, or a combination to generate the green light and the blue light. When the first quantum dot layer 262B and the second quantum dot layer 264B are utilized to generate other combinations of color light, the first quantum dot layer 262B and the second quantum dot layer 264B should be matched with the corresponding light filtering blocks.

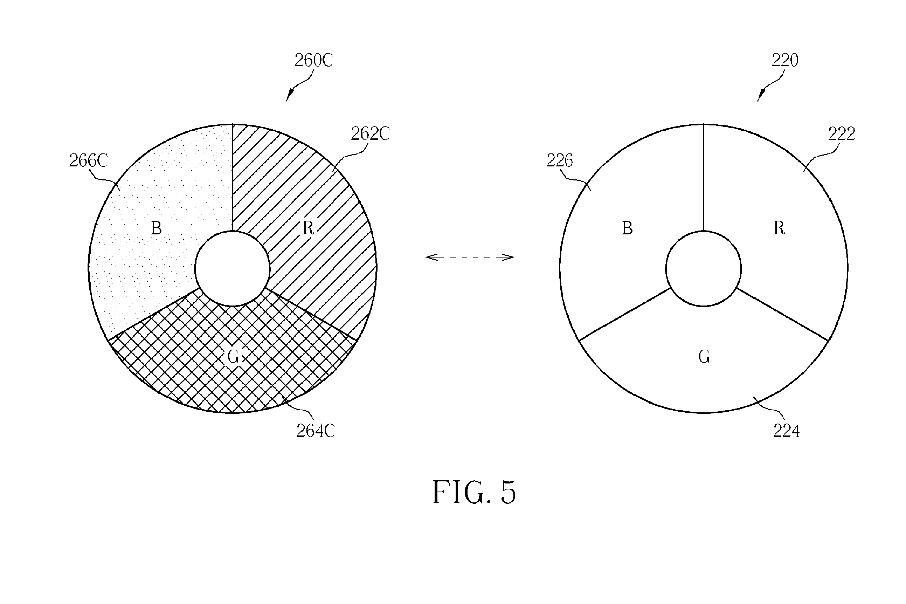

Please refer to FIG. 5, and refer to FIG. 2 as well. FIG. 5 is a diagram showing a third embodiment of a combination of the color wheel and the light conversion element of FIG. 2. As shown in FIG. 5, the light conversion element comprises a first quantum dot layer 262C, a second quantum dot layer 264C, and a third quantum dot layer 266C for generating the red light (such as the red light with a wavelength of 650 nanometers), the green light (such as the green light with a wavelength of 550 nanometers), and the blue light (such as the blue light with a wavelength of 450 nanometers) respectively.

According to the above arrangement, when the visible light generated by the light source 210 passes through the first quantum dot layer 262C, the light with wavelengths below 650 nanometers is converted to the red light with a wavelength of 650 nanometers (or around 650 nanometers) and then passes through the first light filtering block 222. That is, energy of the red light passed through the color wheel 220 comprises energy of the original red, green, and blue light, and even comprises energy of other light. Therefore, the brightness of the red light passed through the color wheel 220 is increased significantly. When the visible light generated by the light source 210 passes through the second quantum dot layer 264C, the light with wavelengths below 550 nanometers is converted to the green light with a wavelength of 550 nanometers (or around 550 nanometers) and then passes through the second light filtering block 224. That is, energy of the green light passed through the color wheel 220 comprises energy of the original green and blue light, and even comprises energy of other light. Therefore, the brightness of the green light passed through the color wheel 220 is increased significantly. When the visible light generated by the light source 210 passes through the third quantum dot layer 266C, the light with wavelengths below 450 nanometers is converted to the blue light with a wavelength of 450 nanometers (or around 450 nanometers) and then passes through the third light filtering block 226. That is, energy of the blue light passed through the color wheel 220 comprises energy of the original blue light and light with wavelengths below the blue light wavelength. Therefore, the brightness of the blue light passed through the color wheel 220 is also increased.

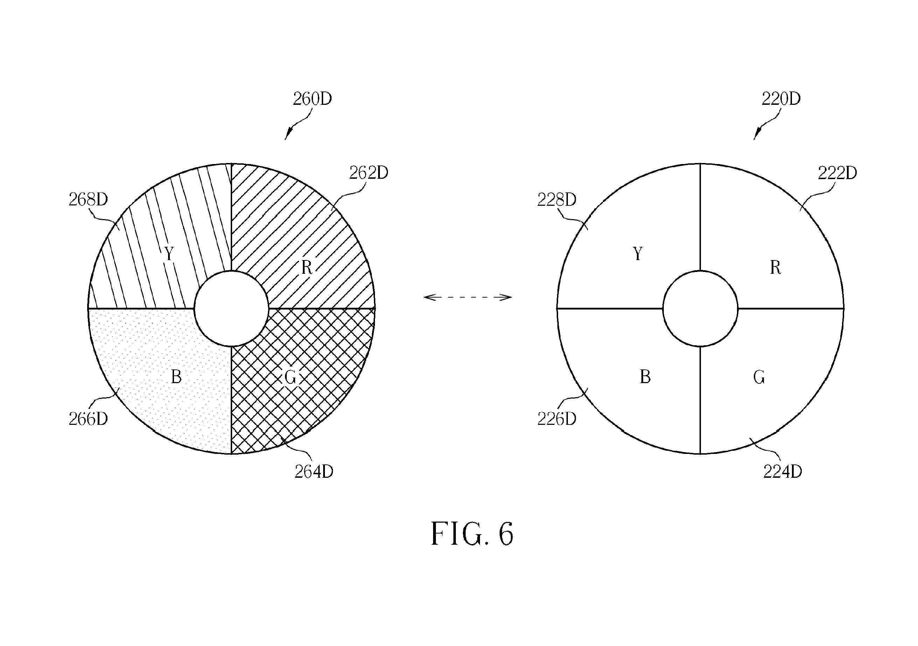

Please refer to FIG. 6, and refer to FIG. 2 as well. FIG. 6 is a diagram showing a fourth embodiment of a combination of the color wheel and the light conversion element of FIG. 2. As shown in FIG. 6, a light conversion element 260D further comprises a fourth quantum dot layer 268D for generating light with a fourth color, such as yellow Y. The color wheel 220D further comprises a corresponding fourth light filtering block 228D, such that images generated by the projector can be more colorful.

The above embodiments are only for illustrating operation of the projector of the present invention. The quantity and the colors of the light filtering blocks of the color wheel and the quantity and the colors of the quantum dot layers of the light conversion element can be determined according to design requirements.

Moreover, in the above embodiments, the light conversion element 260 is disposed between the light source 210 and the color wheel 220 along the light path P of the visible light. However, in other embodiments, the color wheel can be disposed between the light source and the light conversion element along the light path of the visible light.

In addition, the present invention can also be utilized in other types of image generating devices, such as a rear projection television or a liquid crystal display device. The image generating device of the present invention can utilize the light conversion element and the light filtering element to generate light with different colors, and further generates color images.

In contrast to the prior art, the image generating device of the present invention utilizes quantum dots to absorb light with different wavelengths and converts the light to light with a predetermined wavelength, such that the illumination efficiency of each color is increased, and the brightness of images is increased as well. Furthermore, the wavelength of each color light generated by the quantum dots is fixed, such that color purity and color gamut are improved, and the quality of images is further improved.

## Claims

1. An image generating device (200) with improved illumination efficiency comprising:
a light source (210) for generating visible light;
a light filtering element (220, 220D) disposed on a light path of the visible light, the light filtering element (220, 220D) comprising a plurality of light filtering blocks (222, 224, 226, 222D, 224D, 226D, 228D), each of the light filtering blocks being utilized for allowing light with wavelength within a predetermined range to pass through;
**characterized by**:
a light conversion element (260, 260A, 260B, 260C, 260D) disposed on the light path of the visible light, the light conversion element (260, 260A, 260B, 260C, 260D) comprising a first quantum dot layer (262A, 262B, 262C, 262D) for converting light with wavelengths below a first wavelength to light with the first wavelength; and
an image generating element (240) for generating images according to light passed through the light filtering element (220, 220D) and the light conversion element (260, 260A, 260B, 260C, 260D).

2. The image generating device of claim 1, **characterized in that** the light filtering element (220) further comprises a light transmission block (222) for allowing the visible light to pass through, and the first quantum dot layer (262A, 262B, 262C)is arranged at a position corresponding to the light transmission block (222).

3. The image generating device of claim 2, **characterized in that** the light with the first wavelength is red light.

4. The image generating device of claim 1, **characterized in that** the plurality of light filtering blocks (222, 224, 226, 222D, 224D, 226D, 228D) comprises a first light filtering block (222, 222D) for allowing light with wavelengths within a first predetermined range to pass through, a second light filtering block (224, 224D) for allowing light with wavelengths within a second predetermined range to pass through, and a third light filtering block (226, 226D) for allowing light with wavelengths within a third predetermined range to pass through, the first quantum dot layer (262A, 262B, 262C, 262D) is arranged at a position corresponding to the first light filtering block (222, 222D), and the first wavelength is within the first predetermined range.

5. The image generating device of claim 4, **characterized in that** the light conversion element (260, 260A, 260B, 260C, 260D) further comprises a second quantum dot layer (264A, 264B, 264C, 264D) for converting light with wavelengths below a second wavelength to light with the second wavelength, the second quantum dot layer (264A, 264B, 264C, 264D) is arranged at a position corresponding to the second light filtering block (224, 224D), and the second wavelength is within the second predetermined range.

6. The image generating device of claim 5, **characterized in that** the light conversion element (260, 260A, 260B, 260C, 260D) further comprises a third quantum dot layer (266A, 266B, 266C, 266D) for converting light with wavelengths below a third wavelength to light with the third wavelength, the third quantum dot layer (266A, 266B, 266C, 266D) is arranged at a position corresponding to the third light filtering block (226, 226D), the third wavelength is within the third predetermined range, and the second wavelength is greater than the third wavelength.

7. The image generating device of claim 5, **characterized in that** a particle size of a quantum dot of the first quantum dot layer (262A, 262B, 262C, 262D) is different from a particle size of a quantum dot of the second quantum dot layer (264A, 264B, 264C, 264D) .

8. The image generating device of claim 4, **characterized in that** the first predetermined range is between the first wavelength and zero.

9. The image generating device of claim 4, **characterized in that** the first predetermined range is between the first wavelength and a second wavelength.

10. The image generating device of claim 1, **characterized in that** the light conversion element (260, 260A, 260B, 260C, 260D) is disposed on a surface of the light filtering element (220, 220D) .

11. The image generating device of claim 1, **characterized in that** the light conversion element (260, 260A, 260B, 260C, 260D) and the light filtering element (220, 220D) rotate synchronously.

12. The projector of claim 1, further **characterized by** a projection module (250) for projecting the images generated by the image generating element (240).
